# EUROPEAN PATENT APPLICATION

(11) **EP 1 826 044 A1**
(43) Date of publication of application: **29.08.2007**
(21) Application number: 07250682.7
(22) Date of filing: 19.02.2007
(51) Int. Cl.: B60J 1/00, B25B 11/00, B62D 65/06

(54) **Single technician large windshield installation tool**

(30) Priority: 23.02.2006 US 360934
(71) Applicant: Mayhugh, Kent R., Sussex, WI 53089 (US)
(72) Inventor: Mayhugh, Kent R., Sussex, WI 53089 (US)
(74) Representative: Gilmour, David Cedric Franklyn

(57) **Abstract**

A windshield installation tool (1) includes a door glass anchor (10) and a windshield glass anchor (12). The door glass anchor includes a door glass clamp (14) and a pivot structure (16). One end of the pivot structure extends from the door glass clamp and a pivot rod (22) extends from the other end thereof.

The windshield glass anchor includes a windshield glass clamp (30) and a pivot extension (32) that extends from the windshield glass clamp. An inner slide tube (38) is slidably retained in the pivot extension. A pivoting end (40) is formed on one end of the inner slide tube to receive a pivot rod (22).

## Description

### BACKGROUND OF THE INVENTION

### 1. Cross-References to Related Applications

This is a continuation-in-part patent application taking priority from nonprovisional application no. 10/947,924 filed on September 23, 2004.

### 2. Field of the Invention

The present invention relates generally to installation of windshields in vehicles and more specifically to a single technician large windshield installation tool, which eliminates the need for a second technician to install a windshield on a vehicle.

### 3. Discussion of the Prior Art

It appears that the prior art does not disclose a tool, which allows a single technician to install a windshield in a vehicle. Two technicians are required to install a large windshield in a vehicle. A first technician lifts one end of the windshield and the second technician lifts the other end of the windshield for installation and both place the windshield on the vehicle. The advantage of a single technician installation is half the labor cost of a two technician installation.

Accordingly, there is a clearly felt need in the art for a single technician large windshield installation tool, which eliminates the need for a second technician to install a large windshield in a vehicle and allows a large windshield to be installed by a single technician in nearly the same amount of time as a two technician installation.

### SUMMARY OF THE INVENTION

The present invention provides a single technician large windshield installation tool, which eliminates the need for a second technician to install a windshield on a vehicle. The single technician large windshield installation tool (windshield installation tool) includes a door glass anchor and a windshield glass anchor. The door glass anchor includes a door glass clamp and a pivot structure. The pivot structure preferably includes at least one door retention ear, a tube extension and a pivot rod. One end of the at least one door retention ear is attached to the door glass clamp and the other end is attached to the tube extension at substantially one end thereof. The pivot rod extends from the other end of the tube extension.

The windshield glass anchor includes a windshield glass clamp and a pivot extension. The pivot extension preferably includes at least one windshield retention ear, an outer slide tube, an inner slide tube and a pivoting end. One end of the at least one windshield retention ear is attached to the door glass clamp and the other end is attached to the outer slide tube at substantially one end thereof. The inner slide tube is sized to be slidably received by an inner perimeter of the outer slide tube. The pivoting end is formed on one end of the inner slide tube. A pivoting cavity is formed through the pivoting end to receive the pivot rod.

A second embodiment of the windshield installation tool includes a second embodiment of a door glass anchor and the windshield glass anchor. The second embodiment of the door glass anchor includes the door glass clamp, a pivot base structure and a swinging pivot structure. The pivot base structure preferably includes at least one door retention ear, a tube extension and a pivot base. One end of the at least one door retention ear may be attached to at least one vacuum support member of the door glass clamp and the other end is attached to the tube extension at substantially one end thereof. However, the at least one vacuum support member and the at least one door retention ear are preferably fabricated from a single piece of material. A pivot base is attached to the other end of the tube extension. The swinging pivot structure preferably includes a pivot tube, a pivot hub and the pivot rod. The pivot hub is attached to one end of the pivot tube and the pivot rod extends from the other end thereof. The pivot hub is pivotally engaged with the pivot base.

In use, either door glass anchor is preferably attached to a side door window, such that the pivoting rod is substantially vertical. The windshield glass anchor is attached to attached to a windshield. The pivoting end is placed over the pivoting rod and supported by the door glass anchor. A single technician then grasps an end of the windshield. The single technician extends the inner slide tube from the outer slide tube and walks around a front of the vehicle, until they are adjacent an opposite side door window. The technician then lowers the windshield into a vehicle windshield cavity.

Accordingly, it is an object of the present invention to provide a windshield installation tool, which eliminates the need for a second technician to install a windshield in a vehicle.

Finally, it is another object of the present invention to provide a windshield installation tool, which allows a windshield to be installed by a single technician in nearly the same amount of time as a two technician installation.

These and additional objects, advantages, features and benefits of the present invention will become apparent from the following specification.

### BRIEF DESCRIPTION OF THE DRAWINGS

Figure 1 is a perspective view of a windshield installation tool attached to a driver's side door window and to a windshield in accordance with the present invention.
Figure 2 is a front view of a door glass anchor of a windshield installation tool in accordance with the present invention.
Figure 3 is a side view of a door glass anchor of a windshield installation tool in accordance with the present invention.
Figure 4 is a front view of a windshield glass anchor of a windshield installation tool in accordance with the present invention.
Figure 5 is a side view of a windshield glass anchor of a windshield installation tool in accordance with the present invention.
Figure 6 is a perspective view of a second embodiment of a windshield installation tool attached to a driver's side door window and to a windshield in accordance with the present invention.
Figure 7 is a front view of a door glass anchor of a second embodiment of a windshield installation tool in accordance with the present invention.
Figure 8 is a side view of a door glass anchor of a second embodiment of a windshield installation tool in accordance with the present invention.
Figure 9 is an enlarged cross-sectional view of a pivot base and a pivot hub of a second embodiment of a door glass anchor of a second embodiment of a windshield installation tool in accordance with the present invention.

### DETAILED DESCRIPTION OF THE PREFERRED EMBODIMENTS

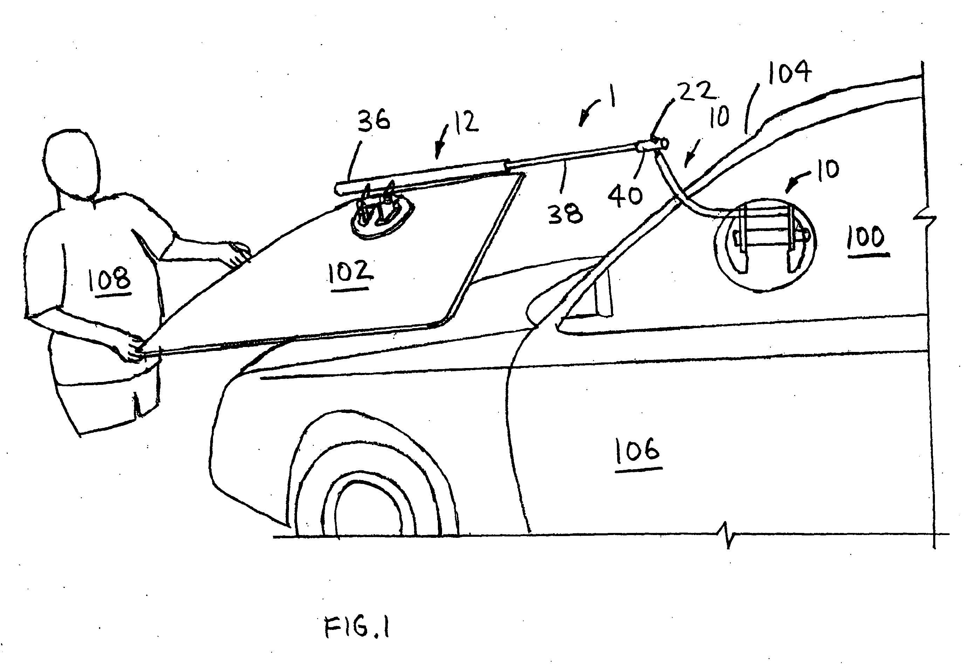

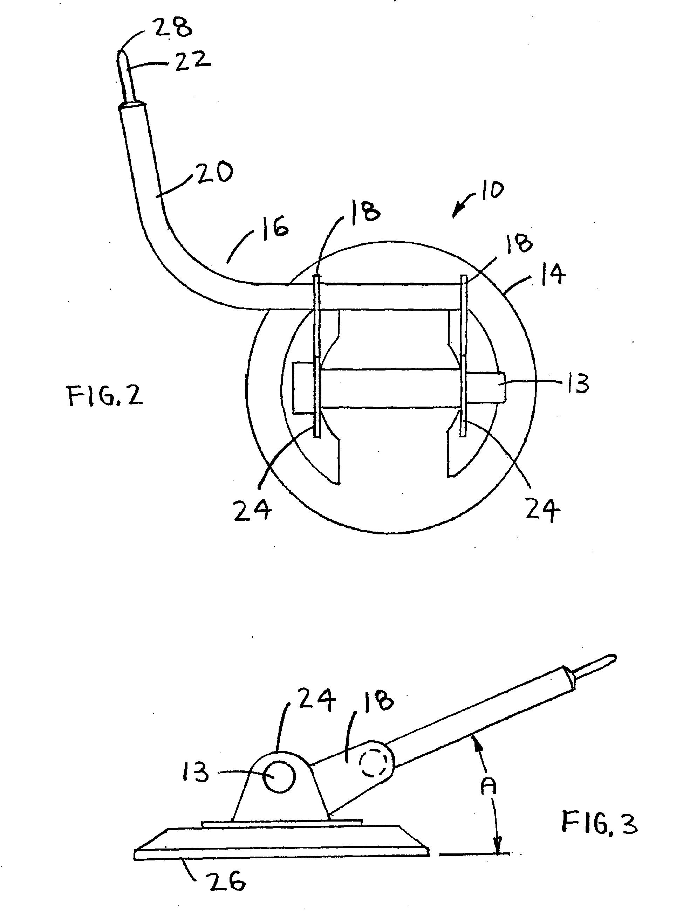

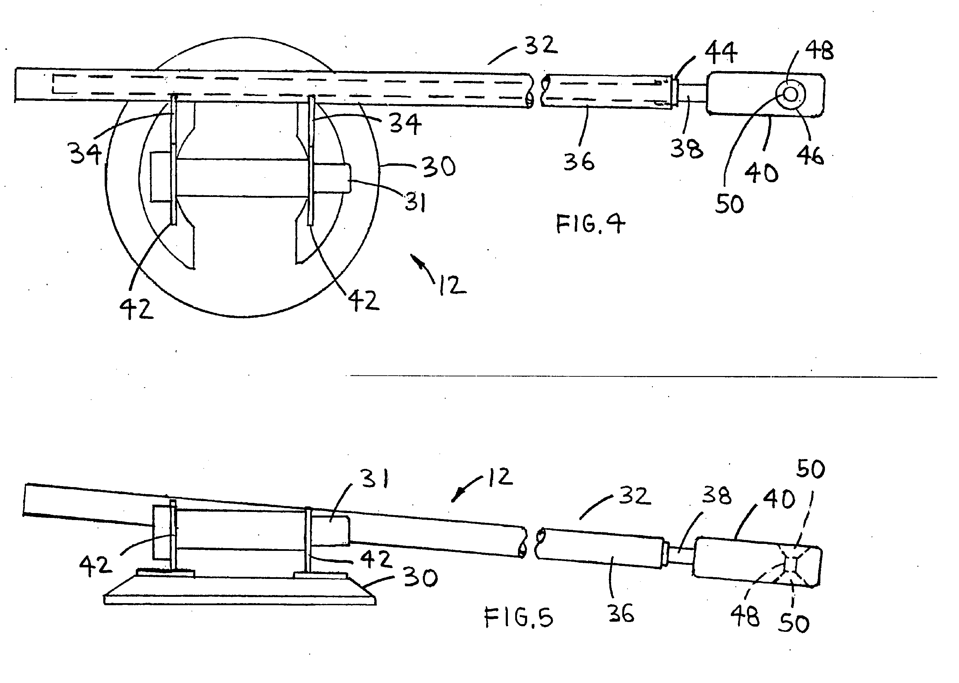

With reference now to the drawings, and particularly to figure 1, there is shown a perspective view of a windshield installation tool 1. With reference to figures 2 - 5, the windshield installation tool 1 includes a door glass anchor 10 and a windshield glass anchor 12. The door glass anchor 10 includes a door glass clamp 14 and a pivot structure 16. The door glass clamp 14 is preferably a N-series hand cup, manufactured by Wood's Powr-Grip Co., Inc. of Laurel, Montana, but other glass vacuum clamps may also be used. The pivot structure 16 preferably includes at least one door retention ear 18, a tube extension 20 and a pivot rod 22. One end of the at least one door retention ear 18 is preferably attached to a vacuum support member 24 of the door glass clamp 14 with welding or any other suitable method. However, the at least one vacuum support member 18 and the at least one door retention ear 24 are preferably fabricated from a single piece of material.

The other end of the at least one door retention ear 18 is preferably attached to the tube extension 20 at substantially one end thereof with welding or any other suitable method. The tube extension 20 preferably has a substantial L-shape and is preferably positioned at an acute angle "A" relative to a bottom of a clamping portion 26 of the door glass clamp 14. However, the tube extension 20 may have a different shape, other than the substantial L-shape. The pivot rod 22 extends from the other end of the tube extension 20. A bullet end 28 is preferably formed on an end of the pivot rod 22.

The windshield glass anchor 12 includes a windshield glass clamp 30 and a pivot extension 32. The windshield glass clamp 30 is preferably a N-series hand cup, manufactured by Wood's Powr-Grip Co., Inc. of Laurel, Montana, but other glass vacuum clamps may also be used. The pivot extension 32 preferably includes at least one windshield retention ear 34, an outer slide tube 36, an inner slide tube 38 and a pivoting end 40. One end of the at least one windshield retention ear 34 is preferably attached to a vacuum support member 42 of the windshield glass clamp 30 with welding or any other suitable method. The other end of the at least one windshield retention ear 34 is preferably attached to the pivot extension 32 at substantially one end thereof with welding or any other suitable method.

The inner slide tube 38 is sized to be slidably received by a bushing 44 or the like retained in an inner perimeter of the outer slide tube 36. The pivoting end 40 is formed on one end of the inner slide tube 38. A pivot cavity 46 is formed through the pivoting end 40 to receive the pivot rod 22. The pivoting cavity 46 preferably includes a through hole 48 and an entrance countersink 50 formed on each end of the through hole 48. Each entrance countersink 50 facilitates the insertion of the pivot rod 22 into the through hole 48. One method of pivoting the windshield glass anchor to the door glass anchor has been shown, but other methods may also be used.

In use, the door glass anchor 10 is preferably attached to a driver's side door window 100, such that the pivoting rod 22 is substantially vertical. The door glass anchor 10 could be modified to be attached to a passenger's side door window. The door glass anchor 10 is attached by depressing a pump button 13, until the door glass anchor 10 is stationary. The windshield glass anchor 12 is attached to a top of a windshield 102 to be installed in a vehicle windshield cavity 104 of a vehicle 106. The windshield glass anchor 12 is attached by depressing a pump button 31, until the windshield glass anchor 12 is stationary. The pivoting end 40 is placed over the pivoting rod 22 and supported by the door glass anchor 10. A single technician 108 then grasps an end of the windshield 102. The single technician 108 extends the inner slide tube 38 from the outer slide tube 36 and walks around a front of the vehicle 106, until they are adjacent a side door window (not shown). The technician 108 then lowers the windshield 102 into the vehicle windshield cavity 104.

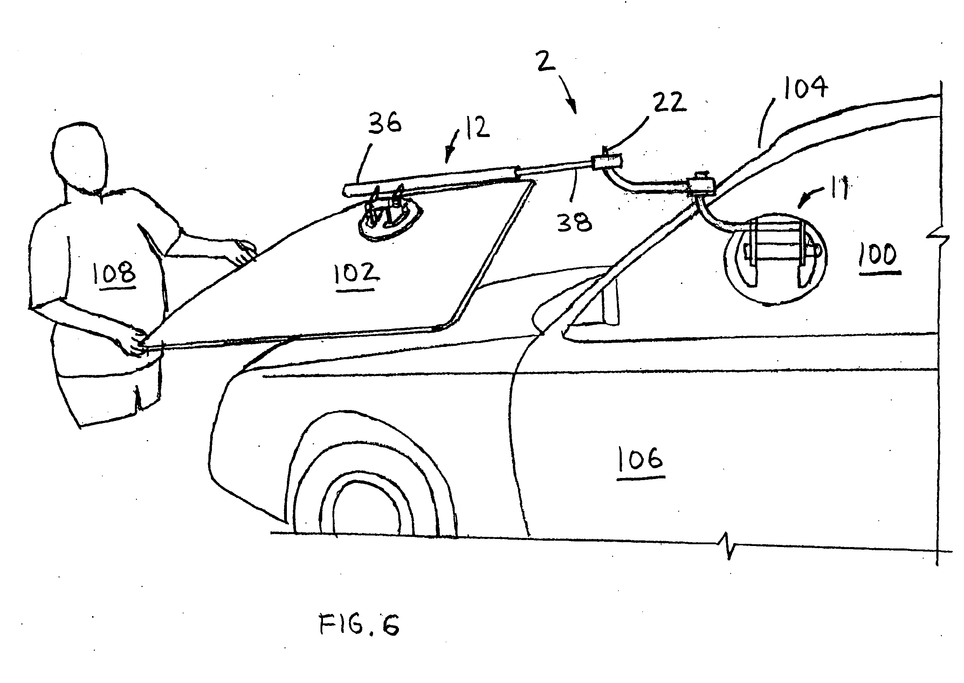

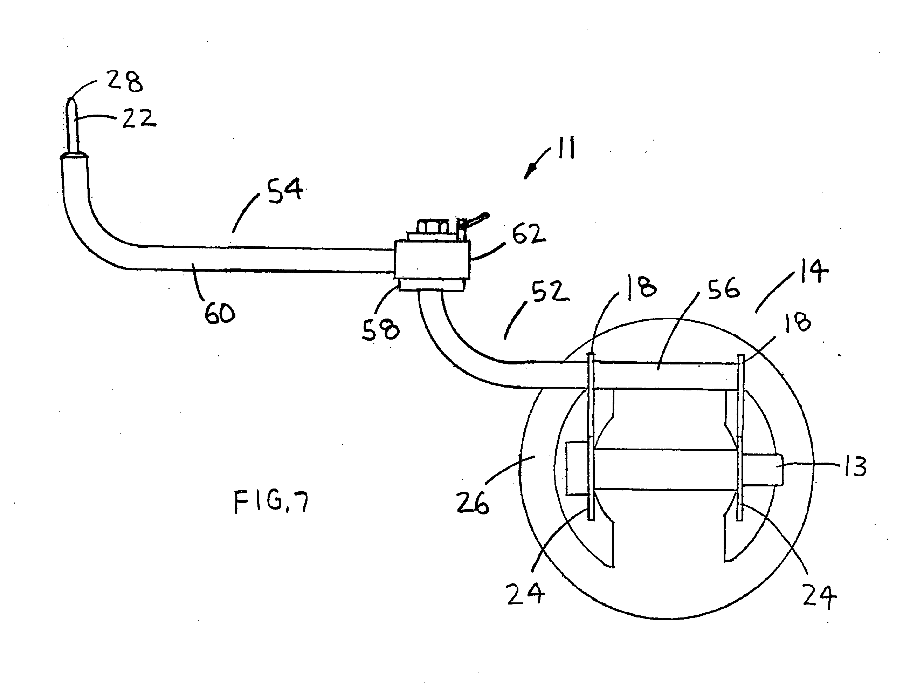

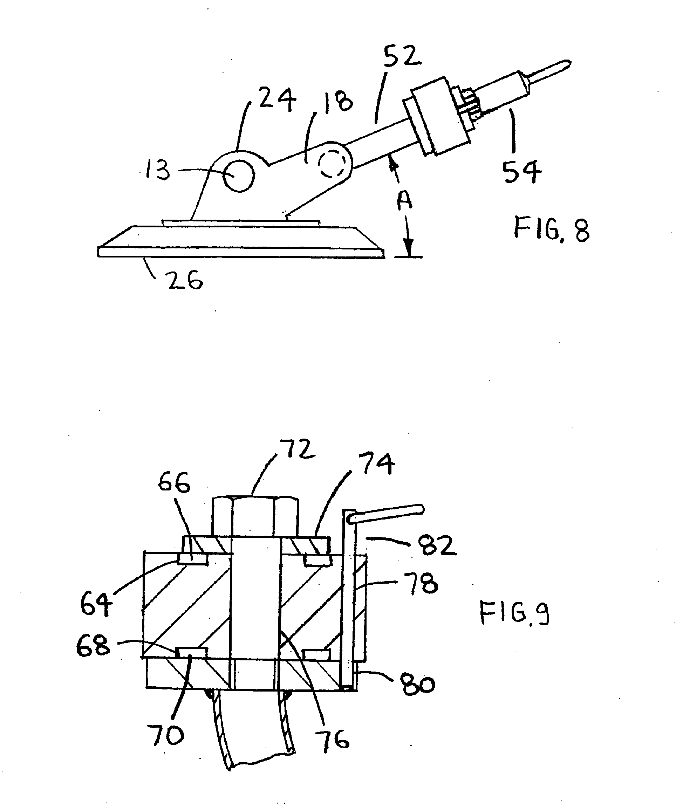

Figure 6 shows a second embodiment of a windshield installation tool 2. With reference to figures 7 - 9, the windshield installation tool 2 includes a door glass anchor 11 and the windshield glass anchor 12. The door glass anchor 11 includes a door glass clamp 14, a pivot base structure 52 and a swinging pivot structure 54. The pivot base structure 52 preferably includes at least one door retention ear 18, a tube extension 56 and a pivot base 58. One end of the at least one door retention ear 18 may be attached to a vacuum support member 24 of the door glass clamp 14 with welding or any other suitable method. However, the at least one vacuum support member 18 and the at least one door retention ear 24 are preferably fabricated from a single piece of material. The other end of the at least one door retention ear 18 is attached to the tube extension 56 at substantially one end thereof with welding or any other suitable method. The tube extension 56 preferably has a substantial L-shape and is preferably positioned at an acute angle "A" relative to a bottom of a clamping portion 26 of the door glass clamp 14. However, the tube extension 56 may have a different shape, other than the substantial L-shape. The other end of the tube extension 56 is terminated with the pivot base 58.

The swinging pivot structure 54 preferably includes a pivot tube 60, a pivot hub 62 and the pivot rod 22. The tube extension 60 preferably has a substantial L-shape, but other shapes may also be used. The pivot tube 60 is terminated on one end by the pivot hub 62 and the pivot rod 22 extends from the other end of the pivot tube 60. A bullet end 28 is preferably formed on an end of the pivot rod 22.

A first bearing groove 64 is formed in one end of the pivot hub 62 to receive a first bearing 66. A second bearing groove 68 is formed in the other end of the pivot hub 62 to receive a second bearing 70. The first and second bearings are preferably thrust bearings, but other types of bearings may also be used. A fastener hole 76 is formed through the pivot hub 62 to receive a threaded fastener 72. The threaded fastener 72 is preferably inserted through a thrust washer 74 and threaded into the pivot base 58 to pivotally retain the pivot base structure 52 relative to the swinging pivot structure 54. A hub pin hole 78 is formed through the pivot hub 62 concentric with a base pin hole 80. The hub and base pin holes are sized to receive a locking pin 82. The pivot base 58, the pivot hub 62 and the thrust washer 74 preferably have round perimeters.

In use, the door glass anchor 11 is preferably attached to a side door window 100, such that the pivoting rod 22 is substantially vertical. The door glass anchor 11 could be modified to be attached to a passenger's side door window. The door glass anchor 11 is attached by depressing the pump button 13, until the door glass anchor 10 is stationary. The locking pin 82 is retained in the pivot base 58 and the pivot hub 62 in some applications, and removed from the pivot base 58 and the pivot hub 62 in other applications.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A single technician windshield installation tool, comprising:
a door glass anchor being attached to a side door window;
a swinging pivot structure extending from said door glass anchor; and
a windshield glass anchor attachable to a windshield of a vehicle, engaging pivotally one end of said windshield glass anchor with said swinging pivot structure.

2. The single technician windshield installation tool of claim 1, further comprising:
said door glass anchor having at least one door glass clamp and a pivot structure.

3. The single technician windshield installation tool of claim 2, further comprising:
one end of said swinging pivot structure being pivotally attached to said pivot structure, extending a pivot rod from the other end of said swinging pivot structure.

4. The single technician windshield installation tool of claim 3, further comprising:
said windshield glass anchor having at least one windshield glass clamp, forming an opening through said one end of said windshield glass anchor to receive said pivot rod.

5. The single technician windshield installation tool of claim 1, wherein:
said at least one windshield glass clamp being slidable relative to said one end of said windshield glass anchor.

6. A method for enabling a single technician to install a windshield into a vehicle, comprising the steps of:
attaching a door glass anchor to a side door window, extending a swinging pivot structure from said door glass anchor, said door glass anchor having at least one door glass clamp; and
attaching a windshield glass anchor to a windshield to be installed in a vehicle, said windshield glass anchor having at least one windshield glass clamp, engaging pivotally one end of said windshield glass anchor with said swinging pivot structure.

7. A method for enabling a single technician to install a windshield into a vehicle of claim 6, comprising the steps of:
grasping one end of the windshield, pivoting said windshield around a front of said vehicle to an opposite side door, lowering the windshield into a vehicle windshield cavity of the vehicle.

8. The method for enabling a single technician to install a windshield into a vehicle of claim 6, further comprising the step of:
providing said door glass anchor with a pivot structure, attaching pivotally one end of said swinging pivot structure to said pivot structure, extending a pivot rod from the other end of said swinging pivot structure.

9. The method for enabling a single technician to install a windshield into a vehicle of claim 8, further comprising the step of:
forming an opening through said one end of said windshield anchor to receive said pivot rod.

10. The method for enabling a single technician to install a windshield into a vehicle of claim 6, further comprising the step of:
making said at least one windshield glass clamp slidable relative to said one end of said windshield glass anchor.

## Amended claims

### Amended claims in accordance with Rule 86(2) EPC.

**1.** A single technician windshield installation tool, comprising:
a door glass anchor for attachment to a side door window, one end of a swinging pivot structure being pivotally retained by said door glass anchor; and
a windshield glass anchor for attachment to a windshield, engaging pivotally one end of said windshield glass anchor with the other end of said swinging pivot structure.

**2.** The single technician windshield installation tool of claim 1, further comprising:
said door glass anchor including at least one door glass clamp and a pivot structure.

**3.** The single technician windshield installation tool of claim 2 wherein:
said one end of said swinging pivot structure being pivotally retained by an end of said pivot structure.

**4.** The single technician windshield installation tool of claim 1, further comprising:
said windshield glass anchor including at least one windshield glass clamp.

**5.** The single technician windshield installation tool of claim 4 wherein:
said at least one windshield glass clamp sliding relative to said windshield glass anchor.

**6.** A single technician windshield installation tool, comprising:
a door glass anchor for attachment to a side door window, one end of a swinging pivot structure being pivotally retained by said door glass anchor, said door glass anchor including at least one door glass clamp; and
a windshield glass anchor for attachment to a windshield, said windshield glass anchor including at least one windshield glass clamp, engaging pivotally one end of said windshield glass anchor with the other end of said swinging pivot structure.

**7.** The single technician windshield installation tool of claim 6, further comprising:
a pivot structure extending from said door glass anchor.

**8.** The single technician windshield installation tool of claim 7 wherein:
said one end of said swinging pivot structure being pivotally retained by an end of said pivot structure.

**9.** The single technician windshield installation tool of claim 6 wherein:
said at least one windshield glass clamp sliding relative to said windshield glass anchor.

**10.** The single technician windshield installation tool of claim 6, further comprising:
said at least one windshield glass clamp being rotatable relative to said windshield glass anchor.
